(19) Europäisches Patentamt
European Patent Office
Office européen des brevets

(11) **EP 2 942 607 B1**

(12) **EUROPEAN PATENT SPECIFICATION**

(45) Date of publication and mention of the grant of the patent:
**13.03.2019 Bulletin 2019/11**

(51) Int Cl.:
***G01F 1/74*** *(2006.01)*      ***G01F 1/44*** *(2006.01)*
***G01F 1/20*** *(2006.01)*      ***G01V 5/00*** *(2006.01)*

(21) Application number: **14735193.6**

(22) Date of filing: **03.01.2014**

(86) International application number:
**PCT/CN2014/000007**

(87) International publication number:
**WO 2014/106457 (10.07.2014 Gazette 2014/28)**

(54) **MULTIPHASE FLOW METERING DEVICE BASED ON CURVED PIPE AND METERING METHOD**

MEHRPHASIGE DURCHFLUSSMESSVORRICHTUNG BASIEREND AUF EINEM GEKRÜMMTEN ROHR UND MESSVERFAHREN

DISPOSITIF DE MESURE D'ÉCOULEMENT POLYPHASIQUE BASÉ SUR UN TUYAU COURBÉ ET PROCÉDÉ DE MESURE ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.01.2013 CN 201310005338**

(43) Date of publication of application:
**11.11.2015 Bulletin 2015/46**

(73) Proprietor: **Haimo Technologies Group Corp.**
**Chengguan District**
**Lanzhou**
**Gansu 730010 (CN)**

(72) Inventors:
• **CHEN, Jige**
  **Beijing 100101 (CN)**
• **WU, Guodong**
  **Lanzhou**
  **Gansu 730010 (CN)**

• **HU, Bo**
  **Beijing 100101 (CN)**

(74) Representative: **Glas, Holger**
**Maiwald Patentanwalts- und**
**Rechtsanwaltsgesellschaft mbH**
**Elisenhof**
**Elisenstraße 3**
**80335 München (DE)**

(56) References cited:
**EP-A2- 1 921 435      WO-A1-01/25762**
**CN-A- 1 434 273       CN-A- 102 087 298**
**CN-A- 103 090 917     CN-U- 202 093 040**
**CN-U- 202 093 040     CN-U- 203 224 264**
**CN-Y- 2 615 641       GB-A- 954 218**
**US-A- 4 144 754       US-A- 4 144 754**
**US-A- 4 282 760       US-A- 5 025 160**
**US-A- 5 396 807**

## Description

### Field of the invention

The invention is in the field of the multiphase fluid flowrate metering. Particularly, the invention relates to a multiphase fluid flowrate metering device based on arc shaped pipe, and to a method for measuring the flows of individual phases in a multiphase fluid by utilizing the multiphase fluid flowrate metering device based on arc shaped pipe.

### Background of the Invention

In the oil-exploring industry, gas and liquid mixed fluids comprising liquid phase and gas phase are usually explored from oil wells, and the fluids are customarily called as "wet gas" in the art. The wet gas belongs to a multiphase fluid in nature, that is, to be a mixed fluid of gas phase and liquid phase. Said gas phase includes, for example, oil field gas or any gases which are non-condensable at room temperature, wherein the oil field gas is generally relatively light alkanes, such as methane, ethane, propane, butane and the like. Said liquid phase may includes: an oil phase, e.g., crude oil per se, and other liquid additives which are dissolved in crude oil during the exploration of crude oil; and a water phase, e.g., formation water, water which is injected into oil wells during the exploration, and other liquid additives which are dissolved in the water phase. In practice, the phase separation between the oil phase and the water phase may occur, and it is also possible that the oil phase and the water phase are mixed together or entirely emulsified. The liquid volume flowrates and gas volume flowrates of gas and liquid mixed fluids explored from oil wells, which are real-time and accurately measured, are necessary basic data for production management and production optimization.

US 4 144 754 A describes fluid flow meter. It employs measurements related to centrifugal flow of the fluids therethrough. There is a complete loop and means for measuring the differential pressure of the fluid in the loop between the inside and outside of the fluid stream near the middle of the loop.

CN 2 615 641 describes a multi-phase flowmeter for cochleate annular tubes.

US 4 282 760 describes improved multiphase fluid flow meter for fluid which contains gas.

US 5 396 807 A describes systems and methods for determining liquid flow rate with gas present, the gas flow rate and liquid flow rate of a two phase fluid flow are determined by passing the fluid flow down an inclined pipe to stratify the flow. The fluid pressure, temperature and density are measured along with the liquid density.

US 5 025160 A describes systems and methods for the measurement of flow velocity and mass flowrate. Time varying measurements indicative of the ratio of mass absorption coefficients of the components of a multiphase flow containing at least two liquid phases at two spaced apart locations are cross correlated to determine liquid flow velocity.

EP 1 921 435 A2 describes generally to the measurement of the density of a fluid in a vessel using gamma radiation in human body. Specifically, embodiments disclosed herein relate to the measurement of the density of a fluid in a vessel by detecting the intensity of gamma rays backscattered by the fluid from a gamma-ray source.

A device for measuring multiphase fluid flowrate has the following working mechanisms: a gas and liquid mixed fluid is separated into a gas phase and a liquid phase via a separator. The separator generally achieves the gas and liquid separation by the means of the gravity force. Alternatively, the gas and liquid separation is achieved via a cyclone separator. Then, the volume flowrates of the gas phase and liquid phase can be respectively metered. However, because the separator and relevant instillations affiliated thereto weigh to be decadal tons, occupy a space having an area of hundreds square meters, and have many controlling links, maintenances and managements for the separator are complex, which is disadvantageous to automation of the management to production procedure, in particular, disadvantageous to the use in oil fields in desert and ocean. Furthermore, the method in which the liquid phase and the gas phase are separated from each other and then their flows are measured is not a real-time on-line measuring method, and the metering precision highly depends on the separation effect of liquid phase and gas phase. The liquid and gas separation effect further seriously depends on the specific flowing conditions. To sum up, the gravity-dependent metering method for separating gas phase from liquid phase has many defects during actual applications.

Hence, there is a need in the art for a device and method which can simply and precisely on-line measure gas volume flowrate and liquid volume flowrate of a gas and liquid mixed fluid. Furthermore, it is more desirable that there is a device and method which can measure the flowrates of gas phase, oil phase and water phase in a multiphase mixed fluid.

### Summary of the invention

A first aspect of the invention is to provide a multiphase fluid flowrate metering device according to claim 1.

A second aspect of the invention is to provide a multiphase fluid flowrate metering device according to claim 2.

A third aspect of the invention relates to a method for measuring the flowrates of gas phase, oil phase and water phase in a multiphase fluid, according to claim 4.

A fourth aspect of the invention relates to a method for measuring flowrates of gas phase, oil phase and water phase in a multiphase fluid, according to claim 5.

**Illustrations to the drawings**

Figure 1 is a scheme for showing the multiphase fluid flowrate metering device based on arc shaped pipe of the invention, in which a segment of the semi-round arc shaped pipe is illustratively shown.

Figure 2 is a scheme for showing the distribution of the gas-oil-water three phases at the vertically oriented cross section of the arc shaped pipe in the multiphase fluid flowrate metering device based on arc shaped pipe of the invention.

Figure 3 is a scheme for showing a preferred embodiment of the invention.

The above drawings are provided merely for illustrating the technical concept and technical solution of the invention, and they are not intended to limit the present invention in any attempts.

**Detailed descriptions to the invention**

In order to facilitate the understandings to the invention, some terms used in the field of the multiphase metering are simply described as follows:
The term "multiphase fluid" is meant to a mixed fluid consisting of a gas phase and a liquid phase, wherein the liquid phase can be classified into an oil phase and a water phase, and the oil phase and the water phase is substantially immiscible with each other. Hence, the multiphase fluid either may be a fluid of gas and liquid two phases, or may be a fluid of gas-oil-water three phases. In the field of exploring oil gas, the gas phase may be formation associated gas, e.g., various alkanes, the oil phase primarily is crude oil, and the water phase primarily comes from underground water and water used in the hydraulic fracture for exploring petroleum. The water phase may further comprise various substances dissolved therein, e.g., surfactants, salts, etc.

The term "volume flowrate" is meant to the volume of a fluid which flows through a certain section in unit time, and in the system of units (SI), its dimension may be $m^3/s$. According to different temperature and pressure at which the fluid is, the volume flowrate can be classified into the working volume flowrate and the standard volume flowrate, wherein the former is the volume flowrate actually measured at actual temperature and pressure of the working conditions, and the latter is obtained by converting the former into the volume flowrate under standard situations (298 K, 101.325 kPa) via the PVT calculation.

The term "phase fraction" is meant to the percentages of individual phases in a multiphase fluid. According to the calculation basis, the phase fraction can be classified into the linear phase fraction, the area phase fraction and the volume phase fraction. The linear phase fraction refers to the ratios of respective absorption route length of gas phase and liquid phase based on the total absorption route length of the gas phase and liquid phase along a line, e.g., along the transmission direction of gamma rays, called as the gas linear phase fraction $\alpha_g$ and the liquid linear phase fraction $\alpha_l$, respectively, in which, the subscript g denotes gas, and the subscript l denotes liquid; alternatively, the linear phase fraction refers to the ratios of respective absorption route length of gas phase, oil phase and water phase based on the total absorption route length of the gas-oil-water three phases, called as $\alpha_g$, $\alpha_o$ and $\alpha_w$, respectively, wherein the subscript g denotes gas, the subscript o denotes oil phase, and the subscript w denotes water phase. The area phase fraction refers to, at a certain cross section, the percentage of the area occupied by gas phase or liquid phase based on the total area of the cross section, called as the gas area fraction $\alpha_g$ and the liquid area fraction $\alpha_l$, respectively; alternatively, the area phase fraction refers to the percentage of the area occupied by gas phase, oil phase or water phase based on the total area of the cross section, called as the gas area fraction $\alpha_g$, the oil area fraction $\alpha_o$ and the water area fraction $\alpha_w$, respectively, wherein the subscripts have the same meanings as above indicated. The volume phase fraction refers to the percentage of respective volume flowrate of gas and liquid phases based on the total volume flowrate of the multiphase fluid. All the phase fractions, no matter the linear phase fraction, the area phase fraction, and the volume phase fraction, are percentages without dimension, and they can meet the following condition: $\alpha_g + \alpha_l = 1$ or $\alpha_g + \alpha_o + \alpha_w = 1$. For clarity, when the term "phase fraction" is mentioned, the inventor will specially notes that whether it is a linear phase fraction or an area phase fraction.

The term "gas content" is meant to the volume phase fraction of gas phase.

The term "radial direction" is meant to the diameter direction of a round.

The term "non-radial direction" is meant to the direction of any line except for the diameter which intersects with the circumference at two points.

The term "vertical" is meant to the same direction as the direction of the gravity accelerated velocity or counter direction thereof.

The following text makes descriptions in detail to the components comprised in the multiphase fluid flowrate metering device as disclosed in the invention and to the method for measuring flows of individual phases in the multiphase fluid by using the multiphase fluid flowrate metering device.

The first and second aspects of the invention relate to multiphase fluid flowrate metering devices.

The multiphase fluid flowrate metering device of the invention uses a pipeline comprising at least one segment of arc shaped pipe. Said multiphase fluid passes through the pipeline. Therein, the pipeline comprising at least one segment of arc shaped pipe refers to that a certain piece or several pieces of the pipeline may be arc shaped pipe. The term "arc" has the meanings which are usually understood by a person skilled in the art, i.e., at least a portion of the circumference curve. In geometry, the arc may be classified into major arc (corresponding central angle is greater than or equal to 180°) and minor arc (corresponding central angle is less than 180°). In the invention, a minor arc is used. The "arc shaped pipe", relative to the "straight pipe", refers to that a portion of the pipe is curved into at least a portion of round, that is, the shape of the pipe is in the arc form. In the invention, at least the cross section of the arc shaped pipe is a round, and however the shape of the cross section of the pipeline at the upstream and downstream of the arc shaped pipe is not limited. In a preferred embodiment of the invention, all pipelines, including the arc shaped pipe and the upstream and downstream pipes, the cross section is all in a round shape. Furthermore, the relation between the section areas of the arc shaped pipe and the upstream and downstream pipes thereof is not specially required. In a preferred embodiment, the arc shaped pipe has the same section area as that of the upstream and downstream pipes thereof. The invention has certain requirements on the arrangement of the arc shaped pipe, that is, the plane on which the arc shaped pipe is positioned should be substantially vertically oriented. That is to say, if the circumference at which the curve is positioned is fully drawn up along the arc shaped pipe, the plane surrounded by the circumference should be substantively vertically oriented, that is, substantively parallel to the gravity direction. The arc shaped pipe further should have at least one vertically oriented cross section. As illustrated in the following text, the plane on which the arc shaped pipe is positioned is required to be substantially vertically oriented and said arc shaped pipe is required to further have at least one vertically oriented cross section so that at the vertically oriented cross section, the direction of the centrifugal force loaded on a fluid coincides with the gravidity direction when the fluid flows through the arc shaped pipe (co-direction or counter direction), which can be advantageous to the symmetry of the flow pattern in the pipe, so as to simplify calculations. In a preferred embodiment, said at least one segment of the arc shaped pipe can form a plurality of arc shaped pipes in series or spiral pipes, so as to prolong the action period of the centrifugal force. The curvature radius of the plurality of arc shaped pipes may be the same or different from each other, preferably the same. Most preferable, the curvature radius reduces from the upstream to the downstream, so as to make the gas phase and liquid phase sufficiently stratified or make the gas-oil-water phases sufficiently stratified in a time as short as possible. Optionally, among the plurality of arc shaped pipes, it is possible that there is a piece of straight pipe, and of course, it may be not present.

The multiphase fluid flowrate metering device of the invention further comprises a gamma-ray monitor, wherein the gamma-ray monitor comprises a gamma-ray emitter and a gamma-ray detector arranged respectively on the upper and lower sides of the vertically oriented cross section of the arc shaped pipe, wherein gamma rays emitted by the gamma-ray emitter penetrate radially or non-radially along the vertically oriented cross section of the arc shaped pipe to reach the gamma-ray detector, and the gamma-ray monitor is a dual-energy gamma-ray monitor.

The gamma-ray monitor is a commonly-used monitor in the field of the multiphase flow metering, and its working mechanism is as follow: radioactive source in the gamma-ray emitter arranged on a side of the pipe can emit gamma rays having a certain initial intensity, i.e., the emissive intensity $N_0$, preferably calibrated gamma rays. When the gamma rays transmit an absorption medium, the intensity attenuation can occur due to the interactions with the absorption medium, e.g., photoelectric effect, Compton scattering, and the production of electron pairs, that is, the absorption medium absorbs at least a portion of the gamma rays. Then, the gamma-ray detector arranged on another side of the pipe may detect the intensity of the attenuated gamma rays, i.e., the transmission intensity N. Based on some equations, the absorption coefficient of the absorption medium can be calculated. Various suitable radioactive sources can be used as the radioactive source used in the invention.

In the case of a multiphase fluid as the absorption medium, since the gas phase and the liquid phase (the liquid phase can be classified into an oil phase and a water phase) have different absorption coefficients to gamma rays, for multiphase fluids having different ratios of gas-oil-water phases, they have different absorption coefficients. By combining the absorption coefficients of pure gas phase, pure oil phase, and pure water phase, the measured absorption coefficient of the gas-oil-water mixture is used for analyses and calculations, to provide information relating to the phase fractions of individual phases.

According to the energy of the used gamma ray, the gamma-ray monitor can be classed into a single-energy gamma ray monitor and a dual-energy gamma ray monitor. The single-energy gamma ray monitor uses gamma rays having single energy, for example, with the use of the radioactive source $^{241}$Am, the energy of emitted gamma rays is 59.5 keV; or with the use of the radioactive source $^{137}$Cs, the energy of emitted gamma ray is 662 keV. However, the dual-energy gamma ray monitor uses gamma rays having two kinds of energy. For example, in the case of the use of $^{241}$Am radioactive source, gamma rays having the energy of 59.5 keV can be produced, wherein a first beam of gamma rays is absorbed by directly passing through the absorption medium, while another beam of gamma rays bombards a target made of silver so as to excite the metal silver to emit gamma rays having a relatively low energy of 22 keV, and the emitted gamma rays are absorbed by passing the absorption medium along the same route of the first beam of gamma rays, and then the transmission intensities of the two gamma rays are detected by the gamma ray detector. The use of dual-energy gamma rays can provide more information relating to the interior composition of the multiphase fluid. As for the selection to dual-energy gamma ray monitors, a person skilled in the art, according to specific properties of objects to be detected, can select specific two energies in the use. For example, when a weight medium is measured, gamma rays having a relatively high energy should be selected, and as to a light medium, e.g., an oil and water mixture, the most suitable ranges of the two energies may be approximately between 20 keV and 100 KeV. Generally, gamma rays having a higher energy in the gamma rays having two energies may be called as high-energy gamma ray, and another gamma rays are called as low-energy gamma rays.

In a word, the gamma ray monitor can obtain information relating to the compositions of individual phases of a fluid in a pipeline in a non-contact and non-injury manner. The single-energy gamma ray monitor mainly is used for provide the information relating to the proportions of gas and liquid phases along the transmission route of gamma rays, that is, to provide the so-called linear phase fraction information. The dual-energy gamma ray monitor, in addition to providing the information with regard to the proportions of gas-oil-water three phases along the transmission route of gamma rays, i.e., the information with regard to the linear phase fractions of individual phases, can provide information with regard to the mixed density of the fluid. The gamma ray monitor used in the invention is well known, and as for more working mechanisms and more details of the monitor, relevant monographs may be referred to.

In a basic embodiment of the invention, the gamma ray monitor in the multiphase fluid flowrate metering device according to the invention is a dual-energy gamma ray. A multiphase fluid flowrate metering device in which a dual-energy gamma ray is used can be used for the online measurement of respective flowrates of gas phase, oil phase and water phase in a multiphase fluid.

In the device of the invention, the gamma ray monitor can be radially arranged, or can be non-radially arranged. In the case of the radial arrangement, the monitor is arranged along the "vertical" radial direction of the vertically oriented cross section of the arc shaped pipe, and in the case of the non-radial arrangement, gamma rays are required to pass through water phase, oil phase and gas phase. In practice, a person skilled in the art, according to specific situations, can select the specific direction of the non-radial arrangement. In practice, the angle between the non-radial direction and the vertical radial direction is used to represent the specific direction of the non-radial arrangement.

The multiphase fluid flowrate metering device of the invention further comprises a total volume flowrate metering device located upstream or downstream of the arc shaped pipe for measuring the total volume flowrate of the multiphase fluid. The total volume flowrate metering device can be used to measure the total volume flowrate, and any flowrate meters suitable for metering the total volume flowrate of a fluid as known in the art of the flow metering may be used, for example, but not limited to, e.g., an elbow flow meter, a venturi flow meter, a ratometer, a float flow meter, and an orifice flow meter. As for the working mechanism and apparatus details of the total volume flowrate metering device, skilled man can refer to relevant textbooks or product specifications of manufacturers of the device. In the invention, a venture flow meter or an elbow flow meter is preferably used, and more preferably, an elbow flow meter is used because the elbow flow meter does not comprise the throat in a venturi flow meter or a orifice flow meter at which the cross section through which a fluid flows becomes narrow, and thus the elbow flow mater can effectively prevent or reduce the reduction or failure of the measuring precision caused by blockages of viscous oil or solid impurities in a multiphase fluid, e.g., sand or powder.

Alternatively, the total volume flowrate metering device also may be a flow velocity metering device, and the flow velocity metering device can measure the average flow velocity of the multiphase fluid which then is multiplied by the cross section area of the pipe to give the total volume flowrate. An exemplary flow velocity metering device may be a device for measuring the flow velocity by the "cross-correlation method" in the art. The basic theory of the method is that two sensors are arranged at the two points which are away from each other in a known distance along the flowing direction of the fluid, and the sensors may be sensors based on microwave, ray, differential pressure or electrical impedance which can be used to measure the density, electrical conductivity or inductance of the fluid. In work, the two sensors measures the time required by the same one signal passing through such known distance, and then the average velocity of the fluid is calculated. The theory of the "cross-correlation method" and the calculation formulae used thereby are known in the prior art, for example, referring to HANDBOOK OF MULTIPHASE FLOW METERING (published by Norway oil and Gas Measurement Association, 2005.03, 2nd Edition).

A first example not being part of the invention relates to a method for measuring gas flowrate and liquid flowrate in a multiphase fluid. The following contents describe each step more particularly.

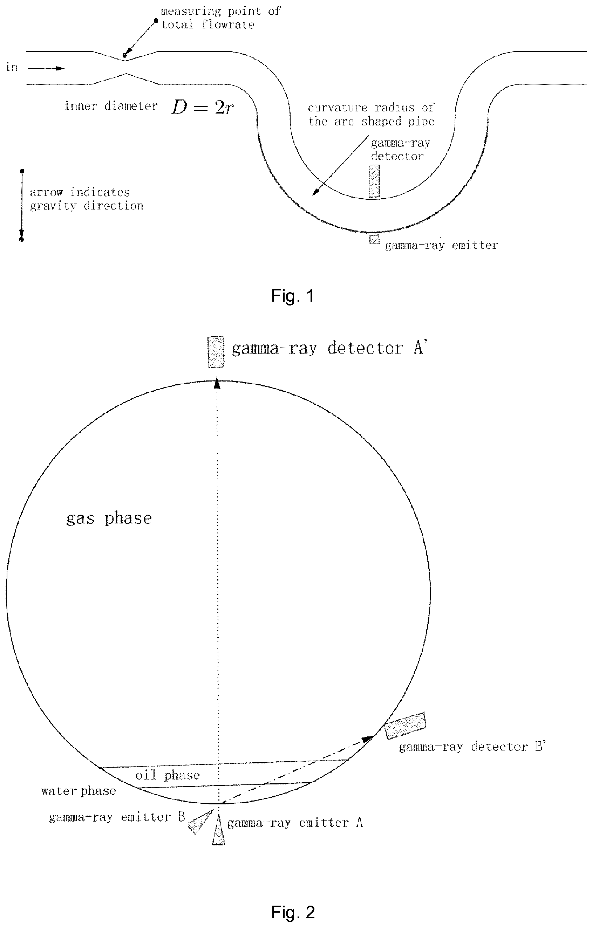

In the step a, regardless of initial flow pattern of the multiphase fluid, a person skilled in the art, can select a suitable flow velocity and the curvature radius through experiences or limited experiments or fluid dynamic simulation calculation, so that the multiphase fluid can form a flow pattern of the gas-liquid stratification in the arc shaped pipe by selecting a suitable flow velocity and a suitable curvature radius of the arc shaped pipe. In the flow pattern, liquid is exposed to a large centrifugal force due to its high density so that the fluid is threw out of the outer circumference side of the arc shaped pipe under the action of the centrifugal force, while gas will be exposed to a low centrifugal force, so that the gas mainly moves along the inner circumference side of the arc shaped pipe. Hence, the liquid-gas stratification can be effected in the arc shaped pipe. At the vertically oriented cross section of the arc shaped pipe, the centrifugal force coincides with the gravity in the direction (co-direction or counter-direction), and at this time, the diagram showing the distribution of the fluid which is stratified at the cross section is symmetric about the vertical diameter direction. As shown in Figure 2, the symmetry will bring great conveniences to the measurement and calculations of the flowrate.

In the step b, the vertically radial linear phase fractions $\alpha_{rg}$ and $\alpha_{rl}$ of the gas and liquid phases along the vertically oriented cross section of the arc shaped pipe is measured by a gamma ray monitor, and the selection to the type of the gamma ray monitor and the arrangement thereof are described in the descriptions for the multiphase fluid flowrate metering device according to the first aspect of the invention.

In the step c, the selection to the type of the total volume flowrate metering device and the arrangement thereof are described in the descriptions for the multiphase fluid flowrate metering device according to the first aspect of the invention. By referring to Figure 2, when merely a gamma ray monitor arranged along the vertical diameter is used, the calculations use the following equations:

1. Calculation of the area phase fractions of liquid phase and gas phase:

$$\alpha_g = \frac{\cos^{-1}(1-2\alpha_{rg}) - 4(1-2\alpha_{rg})\sqrt{\alpha_{rg}(1-\alpha_{rg})}}{\pi} \quad \mathrm{dimensionless}$$

$\alpha_l = 1-\alpha_g$ dimensionless

$\alpha_{r}g$ vertical radial linear phase fraction of gas phase, dimensionless

2. Calculation of the total volume flowrate (taking the Venturi flow meter as an example, when other type of total volume flowrate meter is used, corresponding calculation equations can be used)

$$Q_t = C\frac{\pi d^2}{4}\frac{1}{\sqrt{1-\beta^4}}\sqrt{\frac{2(\Delta P - \rho_{mix}gh)}{\rho_{mix}}}$$

$Q_t$ total flowrate m$^3$/$s$

$C$ outflow coefficients dimensionless

$d$ inner diameter of Venturi throat, m

$\beta = \dfrac{d}{D}$ dimensionless, wherein D is inner diameter of the pipe where pressure measuring point locates, which is upstream of the Venturi throat

$\Delta P$ differential pressure, Pa

$\rho_{mix}$ mixed density, see the following equation, kg/m$^3$

$g$ acceleration of gravity, m/S$^2$

$h$ vertical height difference at the pressuring measuring point, m

Wherein the mixed density $\rho_{mix}$ may be estimated according to history data, or may be calculated with data measured by a phase separation type flow meter, or may be calculated by the following equation

$$\rho_{mix} = \rho_g \alpha_g + \rho_l \alpha_l$$

where there is liquid phase and gas phase, kg/m$^3$

$\alpha_g$ area phase fraction of gas phase, dimensionless

$\alpha_l$ area phase fraction of liquid phase, dimensionless

$\rho_g$ density of gas phase, kg/m$^3$

$\rho_l$ density of liquid phase, kg/m$^3$

$\rho_g, \rho_l$ may obtained from the individual measurement to gas phase and liquid phase after the gas/liquid separation of the multiphase fluid, or obtained from historical data

3. Calculation of volume flowrates of individual phases

$$Q_g = Q_t \times \alpha_g$$

$$Q_l = Q_t \times \alpha_l$$

$Q_g$ volume flowrate of gas phase , m$^3$/$s$

$Q_l$ volume flowrate of liquid phase, m$^3$/$s$

A second example not being part of the invention relates to a method for measuring gas flow and liquid flow in a multiphase fluid. The following contents describe each step more particularly.

The step a is the same as the step a in the first example not being part of the invention.

In the step b, the non-radial linear phase fractions $\alpha_{ng}$ and $\alpha_{nl}$ of the gas and liquid phases along the vertically oriented cross section of the arc shaped pipe is measured by a gamma ray monitor.

In the step c, the selection to the type of the total volume flowrate metering device and the arrangement thereof are described in the descriptions for the multiphase fluid flowrate metering device according to the second aspect of the invention. By referring to Figure 2, when merely a gamma ray monitor arranged non-radially along the vertical diameter is used, the calculations use the following equations:

1. Calculation of the area phase fractions of liquid phase and gas phase:

$$\alpha_{rg} = \alpha_{ng} \times \cos^2 \theta + \sin^2 \theta \quad \text{dimensionless}$$

$$\alpha_g = \frac{\cos^{-1}(1 - 2\alpha_{rg}) - 4(1 - 2\alpha_{rg})\sqrt{\alpha_{rg}(1 - \alpha_{rg})}}{\pi} \quad \text{dimensionless}$$

$$\alpha_l = 1 - \alpha_g \quad \text{dimensionless}$$

$\alpha_{ng}$ non-radial linear phase fraction of gas phase, dimensionless
$\theta$ angle between non-radial direction and vertical radial direction, rad

2. Calculation of the total volume flowrate (taking the Venturi flow meter as an example, when other type of total volume flowrate meter is used, corresponding calculation equations can be used)

$$Q_t = C \frac{\pi d^2}{4} \frac{1}{\sqrt{1-\beta^4}} \sqrt{\frac{2(\Delta P - \rho_{mix} gh)}{\rho_{mix}}}$$

$Q_t$ total flowrate m$^3$/$s$
$C$ outflow coefficient, dimensionless
$d$ inner diameter of Venturi throat, m

$$\beta = \frac{d}{D}$$ dimensionless, wherein D is inner diameter of the pipe where pressure measuring point locates, which is upstream of the Venturi throat
$\Delta P$ differential pressure, Pa
$\rho_{mix}$ mixed density, see the following equation, kg/m$^3$
$g$ acceleration of gravity, m/S$^2$
$h$ vertical height difference at the pressuring measuring point,m

Wherein the mixed density $\rho_{mix}$ may be estimated according to history data, or may be calculated with data measured by a phase separation type flow meter, or may be calculated by the following equation:

$$\rho_{mix} = \rho_g \alpha_g + \rho_l \alpha_l$$

where there is liquid phase and gas phase, kg/m$^3$

$\alpha_g$ area phase fraction of gas phase, dimensionless
$\alpha_l$ area phase fraction of liquid phase, dimensionless
$\rho_g$ density of gas phase, kg/m$^3$
$\rho_l$ density of liquid phase, kg/m$^3$
$\rho_g$, $\rho_l$ may obtained from the individual measurement to gas phase and liquid phase after the gas/liquid separation of the multiphase fluid, or obtained from historical data

3. Calculation of volume flowrates of individual phases

$$Q_g = Q_t \times \alpha_g$$

$$Q_l = Q_t \times \alpha_l$$

$Q_g$ volume flowrate of gas phase, m$^3$/$s$

$Q_l$ volume flowrate of liquid phase, m$^3$/$s$

The third aspect of the invention relates to a method for measuring gas flow, oil flow and water flow in a multiphase fluid. The following contents describe each step more particularly.
The step a is essentially the same as the step a in first example not being part of the invention, and the difference between them resides in that the multiple fluid is not stratified as described in the first example not being part of the invention, that is, to be stratified into gas phase and liquid phase, but into gas phase, oil phase and water phase. In the liquid phase, since the density of the water phase is greater than that of the oil phase, the water phase is present at the outer circumference side, and the oil phase is close to the inner circumference side.
In the step b, the vertically radial linear phase fractions $\alpha_{rg}$, $\alpha_{ro}$ and $\alpha_{rw}$ of the gas phase, oil phase and water phase along the vertically oriented cross section of the arc shaped pipe is measured by a dual-energy gamma ray monitor.

In the step c, from the total volume flowrate $Q_t$ measured by the total volume flowrate metering device arranged at the upstream or downstream of the arc shaped pipe and the radially linear phase fractions $\alpha_{rg}$, $\alpha_{ro}$ and $\alpha_{rw}$ of the gas, oil and water phases, the gas phase flowrate $Q_g$, oil phase flowrate $Q_o$ and water phase flowrate $Q_w$ are calculated, and concrete equations are as follows:

1.Calculations of the area phase fractions of gas phase, oil phase and water phase:

$$\alpha_g = \frac{\cos^{-1}(1-2\alpha_{rg}) - 4(1-2\alpha_{rg})\sqrt{\alpha_{rg}(1-\alpha_{rg})}}{\pi} \quad \text{dimensionless}$$

$$\alpha_w = \frac{\cos^{-1}(1-2\alpha_{rw}) - 4(1-2\alpha_{rw})\sqrt{\alpha_{rw}(1-\alpha_{rw})}}{\pi} \quad \text{dimensionless}$$

$$\alpha_o = 1 - \alpha_w - \alpha_g \quad \text{dimensionless}$$

$\alpha_{rg}$ vertical radial linear phase fraction of gas phase, dimensionless

$\alpha_{rw}$ vertical radial linear phase fraction of water phase,dimensionless

2. Calculation of the total volume flowrate (taking the Venturi flow meter as an example, when other type of total volume flowrate meter is used, corresponding calculation equations can be used)

$$Q_t = C\frac{\pi d^2}{4}\frac{1}{\sqrt{1-\beta^4}}\sqrt{\frac{2(\Delta P - \rho_{mix}gh)}{\rho_{mix}}}$$

$Q_t$ total flowrate m$^3$/$s$
$C$ outflow coefficient, dimensionless
$d$ inner diameter of Venturi throat,m

$\beta = \dfrac{d}{D}$ dimensionless, wherein D is inner diameter of the pipe where pressure measuring point locates, which is upstream of the Venturi throat

$\Delta P$ differential pressure, Pa
$\rho_{mix}$ mixed density, see the following equation, kg/m$^3$
$g$ acceleration of gravity, m/S$^2$
$h$ vertical height difference at the pressuring measuring point, m

Wherein the mixed density $\rho_{mix}$ may be estimated according to history data, or may be calculated with data measured by a phase separation type flow meter, or may be calculated by the following equation:

$$\rho_{mix} = \rho_g\alpha_g + \rho_o\alpha_o + \rho_w\alpha_w$$

where there is oil phase. water phase and gas phase, kg/m$^3$

$\alpha_g$ area phase fraction of gas phase, dimensionless
$\alpha_o$ area phase fraction of oil phase, dimensionless
$\alpha_w$ area phase fraction of water phase, dimensionless
$\rho_g$ density of gas phase, kg/m$^3$
$\rho_o$ density of oil phase, kg/m$^3$

$\rho_w$ density of water phase, kg/m$^3$

$\rho_g$, $\rho_o$, $\rho_w$ may obtained from individual measurement to gas phase, oil phase and water phase after the gas/oil/water separation of the multiphase fluid, or obtained from historical data

3. Calculation of the volume flowrates of individual phases

$$Q_g = Q_t \times \alpha_g$$

$$Q_o = Q_t \times \alpha_o$$

$$Q_w = Q_t \times \alpha_w$$

$Q_g$ volume flowrate of gas phase, m$^3$/$s$
$Q_o$ volume flowrate of oil phase, m$^3$/$s$
$Q_w$ volume flowrate of water phase, m$^3$/s

The fourth aspect of the invention relates to a method for measuring gas phase flowrate, oil phase flowrate and water phase flowrate in a multiphase fluid. The following contents describe each step more particularly.

The step a is the same as the step a in third aspect of the invention.

In the step b, the non-radial linear phase fractions $\alpha_{ng}$, $\alpha_{no}$ and $\alpha_{nw}$ of the gas phase, oil phase and water phase along the vertically oriented cross section of the arc shaped pipe is measured by a dual-energy gamma ray monitor.

In the step c, from the total volume flowrate $Q_t$ measured by the total volume flowrate metering device arranged at the upstream or downstream of the arc shaped pipe and the non-radial linear phase fractions $\alpha_{ng}$, $\alpha_{no}$ and $\alpha_{nw}$ of the gas, oil and water phases, the gas phase flowrate $Q_g$, oil phase flowrate $Q_o$ and water phase flowrate $Q_w$ are calculated, and concrete equations are as follows:

1. Calculations of the area phase fractions of gas phase, oil phase and water phase:

$$\alpha_{rg} = \alpha_{ng} \times \cos^2 \theta + \sin^2 \theta \quad \mathtt{dimensionless}$$

$$\alpha_{ro} = \alpha_{no} \times \cos^2 \theta \quad \mathtt{dimensionless}$$

$$\alpha_{rw} = \alpha_{nw} \times \cos^2 \theta \quad \mathtt{dimensionless}$$

$$\alpha_g = \frac{\cos^{-1}(1 - 2\alpha_{rg}) - 4(1 - 2\alpha_{rg})\sqrt{\alpha_{rg}(1 - \alpha_{rg})}}{\pi} \quad \mathtt{dimensionless}$$

$$\alpha_w = \frac{\cos^{-1}(1 - 2\alpha_{rw}) - 4(1 - 2\alpha_{rw})\sqrt{\alpha_{rw}(1 - \alpha_{rw})}}{\pi} \quad \mathtt{dimensionless}$$

$$\alpha_o = 1 - \alpha_w - \alpha_g \quad \mathtt{dimensionless}$$

$\alpha_{ng}$ non-radial linear phase fraction of gas phase, dimensionless

$\alpha_{nw}$ non-radial linear phase fraction of water phase, dimensionless

$\alpha_{no}$ non-radial linear phase fraction of oil phase, dimensionless

$\theta$ angle between non-radial direction and vertical radial direction, rad

2. Calculation of the total volume flowrate (taking the Venturi flow meter as an example, when other type of total volume flowrate meter is used, corresponding calculation equations can be used)

$$Q_t = C \frac{\pi d^2}{4} \frac{1}{\sqrt{1 - \beta^4}} \sqrt{\frac{2(\Delta P - \rho_{mix} gh)}{\rho_{mix}}}$$

$Q_t$ total flowrate m$^3$/$s$

$C$ outflow coefficient, dimensionless

$d$ inner diameter of Venturi throat,m

$\beta = \dfrac{d}{D}$ dimensionless, wherein D is inner diameter of the pipe where pressure measuring point locates, which is upstream of the Venturi throat

$\Delta P$ differential pressure, Pa

$\rho_{mix}$ mixed density, see the following equation, kg/m$^3$

$g$ acceleration of gravity, m/S$^2$

$h$ vertical height difference at the pressuring measuring point,m

Wherein the mixed density $\rho_{mix}$ may be estimated according to history data, or may be calculated with data measured by a phase separation type flow meter, or may be calculated by the following equation:

$$\rho_{mix} = \rho_g \alpha_g + \rho_o \alpha_o + \rho_w \alpha_w$$

where there is oil phase. water phase and gas phase, kg/m$^3$

$\alpha_g$ area phase fraction of gas phase, dimensionless
$\alpha_o$ area phase fraction of oil phase, dimensionless
$\alpha_w$ area phase fraction of water phase, dimensionless
$\rho_g$ density of gas phase, kg/m$^3$
$\rho_o$ density of oil phase, kg/m$^3$
$\rho_w$ density of water phase, kg/m$^3$
$\rho_g$, $\rho_o$, $\rho_w$ may obtained from individual measurement to gas phase, oil phase and water phase after the gas/oil/water separation of the multiphase fluid, or obtained from historical data

3. Calculation of the volume flowrates of individual phases

$$Q_g = Q_t \times \alpha_g$$

$$Q_o = Q_t \times \alpha_o$$

$$Q_w = Q_t \times \alpha_w$$

$Q_g$ volume flowrate of gas phase, m$^3$/$s$

$Q_o$ volume flowrate of oil phase, m$^3$/$s$
$Q_w$ volume flowrate of water phase, m$^3$/s

**Embodiments**

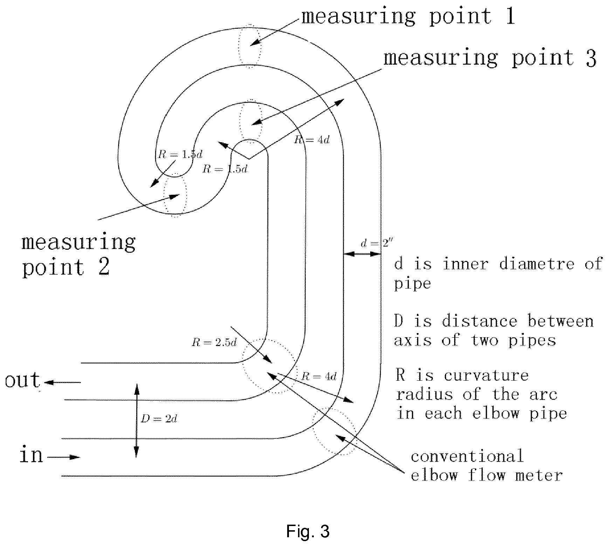

An exemplary preferred embodiment of the invention is shown in Figure 3, and the size relations of individual pipes are also plotted in the figure, wherein d is the inner diameter of the pipe. The pipeline may comprise a plurality of arc shaped pipes, and the curvature radius of individual arc shaped pipe are also plotted in a figure. Along the flowing direction of the fluid, a first arc shaped pipe (R =4d) in these arc shaped pipes can be used as an upstream elbow flow meter for measuring the total volume flowrate. Then, optionally, the fluid flows through a straight line, and then flows into a second arc shaped pipe (R = 4d). Therein, the vertical cross section 1 can be used as the measuring candidate position 1 for measuring the phase fraction, and here, a gamma ray monitor may be arranged along a vertical radial direction or non-radial direction. When measuring gas phase, oil phase, and water phase, the gamma ray monitor is a dual-energy gamma ray monitor. Alternatively, when wanting more sufficient actions of the centrifugal force, it is also possible to add a third arc shaped pipe (R=1.5d) or even a fourth arc shaped pipe (r=1.5d) according to needs, so that the stratification between the gas phase and liquid phase or between gas phase, oil phase and water phase is clearer. Accordingly, the vertical cross sections 2 and 3 may be used as the candidate positions 2 and 3 for measuring the phase fraction, and here, a gamma ray monitor may be arranged along a vertical radial direction or non-radial direction. When measuring gas phase, oil phase, and water phase, the gamma ray monitor is a dual-energy gamma ray monitor. At last, the fluids flows out of the pipeline. Alternatively, in a more preferred embodiment, before the outflow of the fluid, it is also possible to add an optional fifth arc shaped pipe (R=2.5d), and the fifth arc shaped pipe can be used as a downstream elbow flow meter, to further measure the total volume flowrate. A mean value of the measured total volume flowrate and the total volume flowrate measured by the upstream total volume flowrate meter of the first arc shaped pipe is calculated so as to increase the measure precision of the total volume flowrate.

As compared with conventional flow meters, the multiphase fluid flowrate meter of the invention has the following advantages:

1. Complex sampling technique is not in need. The online measurement can assure the representativeness of samples, and the flowrate meter can online measure the flowrates of gas phase, oil phase and water phase in a one-pass pipeline. However, conventional flow meters either requires complex samplings, or requires the separation of individual phases beforehand (for example, gravity separation or cyclone separation), and then in different pipelines, individual phases are measured, respectively. Obviously, the flow meter of the present invention not only provides conveniences but also requires less apparatus.

2. Applicable scope is wide, and there is almost no limitation on the flow pattern of multiphase fluids. In the invention, in a strong gravitation field caused by centrifugal force, the fluctuation at the interface of gas and liquid and the turbulent level of the fluid will be weakened, the shapes of the gas-liquid interfacial and the oil-water interfacial will become straight and even, and the complexity of the instantaneous flow pattern will be decreased. The phenome will be advantageous to increase the measuring precision. Furthermore, the area phase fractions of individual phases can be strictly calculated with the area ratios of individual phases. The simplification of the flow pattern can assure the stable and precise measurements of the phase fraction under various conditions.

3. The overall arrangements of the flowrate meter of the invention is compact, which can facilitate the installation and modification. Furthermore, the flowrate meter does not comprise any components which are easily damaged, and thus it has a long lifetime.

The above contents are merely used for illustrate the invention. Furthermore, a person skilled in the art can understand that all arrangement manners, specific numbers as listed out in the examples are merely illustrative. Thus, a person skilled in the art can change many details of the invention according to actual situations while no deviating the protection scope of the invention as defined by the claims.

**Claims**

1. A multiphase fluid flowrate metering device, comprising the following components:

- a pipeline comprising at least one segment of arc shaped pipe, wherein the arc is a minor arc, and wherein at least the cross section of the arc shaped pipe being round, the plane where the arc shaped pipe is located being vertically oriented, and the arc shaped pipe having at least one vertically oriented cross section;
- a gamma-ray monitor comprising a gamma-ray emitter and a gamma-ray detector arranged respectively on the upper and lower sides of the vertically oriented cross section of the arc shaped pipe, wherein gamma rays emitted by the gamma-ray emitter penetrate vertically and radially along the vertically oriented cross section of the arc shaped pipe to reach the gamma-ray detector, and the gamma-ray monitor is a dual-energy gamma-ray monitor; and
- a total volume flowrate metering device located upstream or downstream of the arc shaped pipe for calculating the total volume flowrate of the multiphase fluid.

2. A multiphase fluid flowrate metering device, comprising the following components:

- a pipeline comprising at least one segment of arc shaped pipe, wherein the arc is a minor arc, and wherein at least the cross section of the arc shaped pipe being round, the plane where the arc shaped pipe is located being vertically oriented, and the arc shaped pipe having at least one vertically oriented cross section;
- a gamma-ray monitor comprising a gamma-ray emitter and a gamma-ray detector arranged respectively in the vertically oriented cross section of the arc shaped pipe, wherein gamma rays emitted by the gamma-ray emitter penetrate water phase, oil phase and gas phase non-radially along the vertically oriented cross section of the arc shaped pipe to reach the gamma-ray detector, and the gamma-ray monitor is a dual-energy gamma-ray monitor; and
- a total volume flowrate metering device located upstream or downstream of the arc shaped pipe for calculating the total volume flowrate of the multiphase fluid.

3. The multiphase fluid flowrate metering device according to claim 1 or 2, wherein the total volume flowrate metering device is selected from the group consisting of an elbow flow meter, a venturi flow meter, a ratometer, a float flow meter, and an orifice flow meter; or the total volume flowrate metering device is selected from a flow velocity measuring device.

4. A method for measuring flowrates of gas phase, oil phase and water phase in a multiphase fluid, comprising the following steps:

a. passing the multiphase fluid through a pipeline comprising at least one segment of arc shaped pipe so that the multiphase fluid can be separated into a gas phase layer, an oil phase layer and a water phase layer under the action of centrifugal force, wherein the arc is a minor arc, and wherein at least the cross section of the arc shaped pipe being round, the plane where the arc shaped pipe is located being vertically oriented, and the arc shaped pipe having at least one vertically oriented cross section;
b. measuring radial linear phase fractions of the gas phase, oil phase and water phase along the vertically oriented cross section of the arc shaped pipe via a gamma-ray monitor, wherein the gamma-ray monitor comprises a gamma-ray emitter and a gamma-ray detector arranged respectively on the upper and lower sides of the vertically oriented cross section of the arc shaped pipe, wherein gamma rays emitted by the gamma-ray emitter penetrate vertically and radially along the vertically oriented cross section of the arc shaped pipe to reach the gamma-ray detector, and the gamma-ray monitor is a dual-energy gamma-ray monitor; and
c. calculating gas phase flowrate, oil phase flowrate and water phase flowrate with the total volume flowrate measured by a total-volume flowrate metering device located upstream or downstream of the arc shaped pipe and the above radial linear phase fractions of the gas phase, oil phase and water phase.

5. A method for measuring flowrates of gas phase, oil phase and water phase in a multiphase fluid, comprising the following steps:

a. passing the multiphase fluid through a pipeline comprising at least one segment of arc shaped pipe so that the multiphase fluid can be separated into a gas phase layer, an oil phase layer and a water phase layer under the action of centrifugal force, wherein the arc is a minor arc, and wherein at least the cross section of the arc shaped pipe being round, the plane where the arc shaped pipe is located being vertically oriented, and the arc shaped pipe having at least one vertically oriented cross section;
b. measuring non-radial linear phase fractions of the gas phase, oil phase and water phase along the vertically oriented cross section of the arc shaped pipe via a gamma-ray monitor, wherein the gamma-ray monitor comprises a gamma-ray emitter and a gamma-ray detector arranged respectively in the vertically oriented cross section of the arc shaped pipe, wherein gamma rays emitted by the gamma-ray emitter penetrate non-radially along the vertically oriented cross section of the arc shaped pipe to reach the gamma-ray detector, and the gamma-ray monitor is a dual-energy gamma-ray monitor; and

c. calculating gas phase flowrate, oil phase flowrate and water phase flowrate with the total volume flowrate measured by a total-volume flowrate metering device located upstream or downstream of the arc shaped pipe and the above non-radial linear phase fractions of the gas phase, oil phase and water phase.

## Patentansprüche

1. Eine Mehrphasenfluid-Durchflussmessvorrichtung, umfassend die folgenden Bestandteile:

   - eine Rohrleitung, beinhaltend zumindest einen Abschnitt eines bogenförmigen Rohrs, wobei der Bogen ein kleiner Bogen ist, und wobei zumindest der Querschnitt des bogenförmigen Rohres rund ist, die Ebene, in der sich das bogenförmige Rohr befindet, vertikal orientiert ist, und das bogenförmige Rohr zumindest einen vertikal orientierten Querschnitt aufweist;
   - einen Gammastrahlenmonitor, beinhaltend einen Gammastrahlenemitter und einen Gammastrahlendetektor, welche jeweils an den oberen und unteren Seiten des vertikal orientierten Querschnitts des bogenförmigen Rohres angeordnet sind, wobei die durch den Gammastrahlenemitter emittierten Gammastrahlen vertikal und radial entlang des vertikal orientierten Querschnitts des bogenförmigen Rohres durchdringen, um den Gammastrahlendetektor zu erreichen, und der Gammastrahlenmonitor ein Dualenergie-Gammastrahlenmonitor ist; und
   - eine Gesamtvolumen-Durchflussmessvorrichtung, die dem bogenförmigen Rohr vorgelagert oder nachgelagert ist, zur Berechnung des Gesamtvolumen-Durchflusses des Mehrphasenfluides.

2. Eine Mehrphasenfluid-Durchflussmessvorrichtung, umfassend die folgenden Bestandteile:

   - eine Rohrleitung, beinhaltend zumindest einen Abschnitt eines bogenförmigen Rohrs, wobei der Bogen ein kleiner Bogen ist, und wobei zumindest der Querschnitt des bogenförmigen Rohres rund ist, die Ebene, in der sich das bogenförmige Rohr befindet, vertikal orientiert ist, und das bogenförmige Rohr zumindest einen vertikal orientierten Querschnitt aufweist;
   - einen Gammastrahlenmonitor, beinhaltend einen Gammastrahlenemitter und einen Gammastrahlendetektor, welche jeweils im vertikal orientierten Querschnitt des bogenförmigen Rohres angeordnet sind, wobei die durch den Gammastrahlenemitter emittierten Gammastrahlen Wasserphase, Ölphase und Gasphase nicht-radial entlang des vertikal orientierten Querschnitts des bogenförmigen Rohres durchdringen, um den Gammastrahlendetektor zu erreichen, und der Gammastrahlenmonitor ein Dualenergie-Gammastrahlenmonitor ist; und
   - eine Gesamtvolumen-Durchflussmessvorrichtung, die dem bogenförmigen Rohr vorgelagert oder nachgelagert ist, zur Berechnung des Gesamtvolumen-Durchflusses des Mehrphasenfluides.

3. Die Mehrphasenfluid-Durchflussmessvorrichtung nach einem der Ansprüche 1 oder 2, wobei die Gesamtvolumen-Durchflussmessvorrichtung ausgewählt wird aus der Gruppe bestehend aus einem Rohrkrümmer-Durchflussmesser, einem Venturi-Durchflussmesser, einem Ratometer, einem Schwebekörper-Durchflussmesser, und einem Messblenden-Durchflussmesser; oder die Gesamtvolumen-Durchflussmessvorrichtung ausgewählt wird aus einer Strömungsgeschwindigkeits-Messvorrichtung.

4. Ein Verfahren zum Messen des Durchflusses von Gasphase, Ölphase und Wasserphase in einem Mehrphasenfluid, umfassend die folgenden Schritte:

   a. Leiten des Mehrphasenfluides durch eine Rohrleitung, umfassend zumindest einen Abschnitt eines bogenförmigen Rohrs, sodass das Mehrphasenfluid unter Einwirkung von Zentrifugalkraft aufgetrennt werden kann in eine Gasphasenschicht, eine Ölphasenschicht und eine Wasserphasenschicht, wobei der Bogen ein kleiner Bogen ist, und wobei zumindest der Querschnitt des bogenförmigen Rohres rund ist, die Ebene, in der sich das bogenförmige Rohr befindet, vertikal orientiert ist, und das bogenförmige Rohr zumindest einen vertikal orientierten Querschnitt aufweist;

   b. Messen der radialen linearen Phasenanteile der Gasphase, Ölphase und Wasserphase entlang des vertikal orientierten Querschnitts des bogenförmigen Rohres mittels eines Gammastrahlenmonitors, wobei der Gammastrahlenmonitor einen Gammastrahlenemitter und einen Gammastrahlendetektor umfasst, welche jeweils an den oberen und unteren Seiten des vertikal orientierten Querschnitts des bogenförmigen Rohres angeordnet sind, wobei die durch den Gammastrahlenemitter emittierten Gammastrahlen vertikal und radial entlang des vertikal orientierten Querschnitts des bogenförmigen Rohres durchdringen, um den Gammastrahlendetektor zu erreichen, und der Gammastrahlenmonitor ein Dualenergie-Gammastrahlenmonitor ist; und
c. Berechnen von Gasphasendurchfluss, Ölphasendurchfluss und Wasserphasendurchfluss mittels des Gesamtvolumen-Durchflusses, welcher durch eine Gesamtvolumen-Durchflussmessvorrichtung gemessen wird, welche dem bogenförmigen Rohr vorgelagert oder nachgelagert ist, und den obigen radialen linearen Phasenanteilen der Gasphase, Ölphase und Wasserphase.

**5.** Ein Verfahren zum Messen des Durchflusses von Gasphase, Ölphase und Wasserphase in einem Mehrphasenfluid, umfassend die folgenden Schritte:

a. Leiten des Mehrphasenfluides durch eine Rohrleitung, umfassend zumindest einen Abschnitt eines bogenförmigen Rohrs, sodass das Mehrphasenfluid unter Einwirkung von Zentrifugalkraft aufgetrennt werden kann in eine Gasphasenschicht, eine Ölphasenschicht und eine Wasserphasenschicht, wobei der Bogen ein kleiner Bogen ist, und wobei zumindest der Querschnitt des bogenförmigen Rohres rund ist, die Ebene, in der sich das bogenförmige Rohr befindet, vertikal orientiert ist, und das bogenförmige Rohr zumindest einen vertikal orientierten Querschnitt aufweist;
b. Messen der nicht-radialen linearen Phasenanteile der Gasphase, Ölphase und Wasserphase entlang des vertikal orientierten Querschnitts des bogenförmigen Rohres mittels eines Gammastrahlenmonitors, wobei der Gammastrahlenmonitor einen Gammastrahlenemitter und einen Gammastrahlendetektor umfasst, welche jeweils im vertikal orientierten Querschnitt des bogenförmigen Rohres angeordnet sind, wobei die durch den Gammastrahlenemitter emittierten Gammastrahlen nicht-radial entlang des vertikal orientierten Querschnitts des bogenförmigen Rohres durchdringen, um den Gammastrahlendetektor zu erreichen, und der Gammastrahlenmonitor ein Dualenergie-Gammastrahlenmonitor ist; und
c. Berechnen von Gasphasendurchfluss, Ölphasendurchfluss und Wasserphasendurchfluss mittels des Gesamtvolumen-Durchflusses, welcher durch eine Gesamtvolumen-Durchflussmessvorrichtung gemessen wird, welche dem bogenförmigen Rohr vorgelagert oder nachgelagert ist, und den obigen nicht-radialen linearen Phasenanteilen der Gasphase, Ölphase und Wasserphase.

## Revendications

**1.** Dispositif de mesure de débit d'un fluide polyphasique, comprenant les composants suivants :

- une canalisation comprenant au moins un segment de tuyau de forme courbée, dans lequel la courbe est une courbe mineure, et dans lequel au moins la section transversale du tuyau de forme courbée est ronde, le plan où se trouve le tuyau de forme courbée est orienté verticalement, et le tuyau de forme courbée présente au moins une section transversale orientée verticalement ;
- un détecteur à rayons gamma comprenant un émetteur de rayons gamma et un récepteur de rayons gamma agencés respectivement sur les côtés supérieur et inférieur de la section transversale orientée verticalement du tuyau de forme courbée, dans lequel les rayons gamma émis par l'émetteur de rayons gamma pénètrent verticalement et radialement le long de la section transversale orientée verticalement du tuyau de forme courbée pour atteindre le récepteur de rayons gamma, et le détecteur à rayons gamma est un détecteur à rayons gamma bi-énergie ; et
- un dispositif de mesure de débit volumique total situé en amont ou en aval du tuyau de forme courbée pour calculer le débit volumique total du fluide polyphasique.

**2.** Dispositif de mesure de débit d'un fluide polyphasique, comprenant les composants suivants :

- une canalisation comprenant au moins un segment de tuyau de forme courbée, dans lequel la courbe est une courbe mineure, et dans lequel au moins la section transversale du tuyau de forme courbée est ronde, le plan où se trouve le tuyau de forme courbée est orienté verticalement, et le tuyau de forme courbée présente au moins une section transversale orientée verticalement ;
- un détecteur à rayons gamma comprenant un émetteur de rayons gamma et un récepteur de rayons gamma agencés respectivement dans la section transversale orientée verticalement du tuyau de forme courbée, dans lequel les rayons gamma émis par l'émetteur de rayons gamma pénètrent non radialement la phase aqueuse, la phase huileuse et la phase gazeuse le long de la section transversale orientée verticalement du tuyau de forme courbée pour atteindre le récepteur de rayons gamma, et le détecteur à rayons gamma est un détecteur à rayons gamma bi-énergie ; et
- un dispositif de mesure de débit volumique total situé en amont ou en aval du tuyau de forme courbée pour calculer le débit volumique total du fluide polyphasique.

3. Dispositif de mesure de débit d'un fluide polyphasique selon la revendication 1 ou 2, dans lequel le dispositif de mesure de débit volumique total est sélectionné parmi le groupe constitué par un débitmètre coudé, un débitmètre à tube de Venturi, un rotamètre, un débitmètre à flotteur et un débitmètre à diaphragme ; ou le dispositif de mesure de débit volumique total est sélectionné parmi les dispositifs de mesure de vitesse d'écoulement.

4. Procédé de mesure des débits de phase gazeuse, de phase huileuse et de phase aqueuse dans un fluide polyphasique, comprenant les étapes suivantes :

   a. passage du fluide polyphasique à travers une canalisation comprenant au moins un segment de tuyau de forme courbée, de telle sorte que le fluide polyphasique peut être séparé en une couche de phase gazeuse, une couche de phase huileuse et une couche de phase aqueuse sous l'action de la force centrifuge, dans lequel la courbe est une courbe mineure, et dans lequel au moins la section transversale du tuyau de forme courbée est ronde, le plan où se trouve le tuyau de forme courbée est orienté verticalement, et le tuyau de forme courbée présente au moins une section transversale orientée verticalement ;
   b. mesure de fractions de phase linéaires radiales de la phase gazeuse, de la phase huileuse et de la phase aqueuse le long de la section transversale orientée verticalement du tuyau de forme courbée via un détecteur à rayons gamma, dans lequel le détecteur à rayons gamma comprend un émetteur de rayons gamma et un récepteur de rayons gamma agencés respectivement sur les côtés supérieur et inférieur de la section transversale orientée verticalement du tuyau de forme courbée, dans lequel les rayons gamma émis par l'émetteur de rayons gamma pénètrent verticalement et radialement le long de la section transversale orientée verticalement du tuyau de forme courbée pour atteindre le récepteur de rayons gamma, et le détecteur à rayons gamma est un détecteur à rayons gamma bi-énergie ; et
   c. calcul du débit de la phase gazeuse, du débit de la phase huileuse et du débit de la phase aqueuse à partir du débit volumique total mesuré par un dispositif de mesure de débit volumique total situé en amont ou en aval du tuyau de forme courbée et des fractions de phase linéaires radiales supérieures de la phase gazeuse, de la phase huileuse et de la phase aqueuse.

5. Procédé de mesure des débits de phase gazeuse, de phase huileuse et de phase aqueuse dans un fluide polyphasique, comprenant les étapes suivantes :

   a. passage du fluide polyphasique à travers une canalisation comprenant au moins un segment de tuyau de forme courbée, de telle sorte que le fluide polyphasique peut être séparé en une couche de phase gazeuse, une couche de phase huileuse et une couche de phase aqueuse sous l'action de la force centrifuge, dans lequel la courbe est une courbe mineure, et dans lequel au moins la section transversale du tuyau de forme courbée est ronde, le plan où se trouve le tuyau de forme courbée est orienté verticalement, et le tuyau de forme courbée présente au moins une section transversale orientée verticalement ;
   b. mesure de fractions de phase linéaires non radiales de la phase gazeuse, de la phase huileuse et de la phase aqueuse le long de la section transversale orientée verticalement du tuyau de forme courbée via un détecteur à rayons gamma, dans lequel le détecteur à rayons gamma comprend un émetteur de rayons gamma et un récepteur de rayons gamma agencés respectivement dans la section transversale orientée verticalement du tuyau de forme courbée, dans lequel les rayons gamma émis par l'émetteur de rayons gamma pénètrent non radialement le long de la section transversale orientée verticalement du tuyau de forme courbée pour atteindre le récepteur de rayons gamma, et le détecteur à rayons gamma est un détecteur à rayons gamma bi-énergie ; et
   c. calcul du débit de phase gazeuse, du débit de phase huileuse et du débit de phase aqueuse à partir du débit volumique total mesuré par un dispositif de mesure de débit volumique total situé en amont ou en aval du tuyau de forme courbée et des fractions de phase linéaires non radiales de la phase gazeuse, de la phase huileuse et de la phase aqueuse.

measuring point of
total flowrate

in →

inner diameter $D = 2r$

curvature radius of
the arc shaped pipe

gamma-ray
detector

arrow indicates
gravity direction

gamma-ray emitter

Fig. 1

gamma-ray detector A'

gas phase

gamma-ray detector B'

oil phase

water phase

gamma-ray emitter B

gamma-ray emitter A

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4144754 A
- CN 2615641
- US 4282760 A
- US 5396807 A
- US 5025160 A
- EP 1921435 A2

**Non-patent literature cited in the description**

- HANDBOOK OF MULTIPHASE FLOW METERING. Norway oil and Gas Measurement Association, March 2005